# DEMANDE DE BREVET EUROPEEN

(11) **EP 4 557 634 A1**
(43) Date de publication de la demande: **21.05.2025**
(21) Numéro de dépôt: 24213075.5
(22) Date de dépôt: 14.11.2024
(51) Int. Cl.: H04B 7/185

(54) **CONTRÔLE D'ACCÈS DYNAMIQUE D'AU MOINS UN TERMINAL DE COMMUNICATION AUX RESSOURCES DE COMMUNICATION SATELLITE D'UNE CONSTELLATION DE SATELLITES DÉFILANTS**

(30) Priorité: 15.11.2023 FR 2312496
(71) Demandeur: THALES, 92190 Meudon (FR)
(72) Inventeur: SOULIE, Antoine, 92622 GENNEVILLIERS CEDEX (FR); SOUMPHOLPHAKDY, Viphakone, 92622 GENNEVILLIERS CEDEX (FR); SCHOLLER, Franck, 92622 GENNEVILLIERS CEDEX (FR)
(74) Mandataire: Lavoix

(57) **Abrégé**

La présente invention concerne un procédé (36) de contrôle d'accès dynamique d'un terminal aux ressources satellites d'une constellation de satellites défilants, comprenant les étapes suivantes, pour une mission prédéterminée :
- planification géolocalisée (38) préalable de la partition de l'allocation de l'ensemble des ressources satellites en fonction d'un besoin géolocalisé associé à ladite mission, et du défilement prédéterminé de chaque satellite ;
- contrôle d'accès dynamique (44) dudit terminal auxdites ressources satellites en appliquant, à chaque instant prédéterminé de ladite mission, les sous-étapes suivantes :
- identification et localisation (48) dudit terminal ;
- détermination (50) de la nature du service requis dudit terminal ;
- routage dudit terminal vers un morceau de ladite partition en fonction de ladite identification, de ladite localisation et de ladite nature de service.

## Description

La présente invention concerne un procédé de contrôle d'accès dynamique d'au moins un terminal de communication aux ressources de communication satellite d'une constellation de satellites défilants.

La présente invention concerne également un programme d'ordinateur comportant des instructions logicielles qui, lorsqu'elles sont exécutées par un ordinateur, mettent en oeuvre un tel procédé de contrôle d'accès dynamique d'au moins un terminal de communication aux ressources de communication satellite d'une constellation de satellites défilants.

La présente invention concerne également un gestionnaire configuré pour mettre en oeuvre un tel procédé de contrôle d'accès dynamique d'au moins un terminal de communication aux ressources de communication satellite d'une constellation de satellites défilants.

La présente invention concerne également un système de communication comprenant un tel gestionnaire, une constellation de satellites défilants, au moins un terminal de communication, au moins une station d'ancrage au sol.

L'invention se rapporte plus particulièrement au domaine des communications par satellite (satcom) notamment en vue d'une application de la future norme (i.e. standard) pour les réseaux non terrestres 3GPP (de l'anglais *Third Génération Patnership Project*).

Les nouvelles constellations de satellites ainsi que les satellites géostationnaires haut débit HTS (de l'anglais *High Throughput Satellite*) offrent une couverture globale ou multispots, chaque spot étant typiquement un cercle ou une ellipse de 100 à 500 km de diamètre, une couverture multispots couvrant un ou plusieurs continents, voire l'ensemble du globe.

Dans le cas d'usages gouvernementaux, les coûts d'acquisition et d'exploitation de telles constellations sont tels qu'il n'est pas envisageable qu'ils soient supportés par un seul pays, si bien qu'on cherche à partager de telles capacités satcom entre une pluralité d'opérateurs couvrant chacun des zones d'intérêt différentes ou se chevauchant. De plus, dans un tel contexte de communications gouvernementales, il est également parfois nécessaire, pour les communications qui le nécessitent, de garantir leur souveraineté entre les zones d'intérêt et un ancrage souverain présent géographiquement dans le pays.

Actuellement, les principales techniques connues pour permettre à une pluralité d'opérateurs (gouvernementaux ou non) de partager une capacité sont associées aux standards 3GPP, notamment le chapitre 4 du standard 3GPP TS 28.530 ou encore le standard 3GPP TS 23.247, portant respectivement sur la capacité de partitionner l'ensemble des ressources radio et coeur de réseau pour offrir une infrastructure virtuelle avec moyens d'orchestration et de management de chaque partition (i.e. morceau ou encore en anglais *slice*) sur la définition de zones associée à un groupe de communication propre à y recevoir des messages broadcastés.

Toutefois ces techniques actuelles ne sont pas adaptées pour prendre en compte la contrainte associée au domaine des communications protégées utilisant des satellites défilants en orbite non-géostationnaire, telle que l'orbite terrestre basse (LEO de l'anglais *low earth orbit*) ou l'orbite terrestre moyenne (MEO de l'anglais *medium earth orbit*)*.*

En effet, pour de telles communications sous une constellation défilante, la couverture n'est plus globale, mais régionale sous chacun des satellites qui ne sont plus « fixes » (i.e. géostationnaires) mais défilent dans l'espace.

Si certaines communications brèves peuvent être faites via le même satellite défilant, en général, les communications doivent être relayées entre les satellites lorsque l'émetteur et le récepteur ne sont pas ou plus couverts par le même satellite. En effet, les réseaux de communication terrestres étant fixes (i.e. ancrés), les stations d'ancrage ne sont pas en perpétuel déplacement pour assurer une continuité de communication avec un même satellite.

Dans le contexte des communications protégées, le relayage des communications se décline donc dans un relayage du signal radiofréquence entre satellites.

Pour de telles communication utilisant des satellites défilants en orbite non-géostationnaire, la partition de l'ensemble des ressources de communication par satellites défilants est généralement globale sur l'ensemble de la constellation en partageant, selon une planification statique, les ressources réseaux en plusieurs réseaux virtualisés prédéfinis, par exemple en appliquant une règle prédéterminée de qualité de service QoS (de l'anglais *Quality Of Service*) répartissant par exemple de manière statique 30% des ressources à un premier opérateur et 70% à un deuxième opérateur.

Une telle partition (i.e. slice) globale sur la constellation n'est pas optimale, car statique, non évolutive et rétentrice de ressources. De plus, il est possible qu'elle ne soit pas utilisée dans sa totalité. Une telle partition (i.e. slice) globale est par ailleurs impropre à prendre en compte la localisation des ancrages et des usagers, et la capacité associée au besoin géographique localisé de couverture des terminaux usagers.

En outre, une telle partition (i.e. slice) globale est impropre à répondre à des problématiques tels que la gouvernance des moyens physiques et l'optimisation de l'ingénierie de trafic (de l'anglais *trafic engineering*)*.*

Le but de l'invention est alors de proposer une solution pour partitionner l'ensemble des ressources de communications satellite d'une constellation de satellites défilants permettant de pallier les inconvénients de l'état de la technique précités.

A cet effet, l'invention a pour objet un procédé de contrôle d'accès dynamique d'au moins un terminal de communication aux ressources de communication satellite d'une constellation de satellites défilants, le procédé comprenant les étapes suivantes, pour au moins une mission de communication prédéterminée :
- planification géolocalisée, préalable à ladite mission, de la partition de l'allocation de l'ensemble des ressources de communication satellite de ladite constellation de satellites défilants en fonction d'un besoin géolocalisé, associé à ladite mission, et du défilement prédéterminé de chaque satellite défilant de ladite constellation ;
- contrôle d'accès dynamique dudit au moins un terminal de communication auxdites ressources de communication satellite de ladite constellation de satellites défilants en appliquant, à chaque instant prédéterminé d'une pluralité d'instants prédéterminés de ladite mission, les sous-étapes suivantes :
   - identification et localisation géographique dudit au moins un terminal requérant un accès audites ressources de communication satellite de ladite constellation de satellites défilants ;
   - détermination de la nature du service de communication requis par ledit au moins un terminal requérant un accès auxdites ressources de communication satellite ;
   - routage dudit au moins un terminal vers un morceau de ladite partition répondant au besoin de communication dudit au moins un terminal, ledit besoin étant au moins défini en fonction de ladite identification, de ladite localisation géographique et de ladite nature de service.

Ainsi, la présente invention propose un contrôle d'accès dynamique basé sur l'identification, la localisation et la nature du service requis, ce qui permet avantageusement de prendre en compte dynamiquement les aspects et besoins spécifiques associés à la mise en place préalable d'une planification géolocalisée fournissant une partition géolocalisée (associée à la notion anglaise de « geofencing ») permettant d'offrir une partition physique sur une zone ou plusieurs zones définies à la différence de la partition globale précitée impropre à prendre en compte un besoin géolocalisé en fonction de la localisation des ancrages et des usagers.

Un tel contrôle d'accès dynamique selon la présente invention permet de gérer la notion de zone géographique pour assurer une planification différenciée selon le lieu. On obtient ainsi une planification non uniforme des ressources en fonction de la zone à couvrir et de l'usage qui en est fait avec prise en compte de la localisation et de la nature du service dans le contrôle d'accès.

La partition fournie selon la présente invention est ainsi adaptée finement directement au besoin géolocalisé. On obtient ainsi une orchestration dynamique propre à garantir le contrôle d'accès à une ressource spatiale géo-localisée (et non définie globalement tel qu'effectué selon l'état de la technique actuel). Une telle orchestration permet par exemple notamment qu'un terminal utilisateur localisé sur un territoire tel que la France ait accès préférentiellement aux de communication satellites qui sont elles-mêmes également localisées au-dessus du territoire français, sauf si le service requis de par sa nature est souverain et dans ce cas un terminal utilsateur rattaché à un autre pays que la France mais localisé en France pourra selon la présente invention être judiceusement routé vers un ancrage adapté permettrant de garantir la souveraineté requise tel que décrit plus en détail par la suite.

Suivant d'autres aspects avantageux de l'invention, le procédé de contrôle d'accès dynamique d'au moins un terminal de communication aux ressources de communication satellite d'une constellation de satellites défilants comprend une ou plusieurs des caractéristiques suivantes, prises isolément ou suivant toutes les combinaisons techniquement possibles :
- ladite planification géolocalisée de la partition de l'allocation de l'ensemble des ressources de communication satellite de ladite constellation de satellites défilants comprend le partage géographique de trois types distincts de ressources spatiales par satellite défilant, lesdits trois types correspondant aux :
   - ressources spatiales associées aux liaisons de communication entre ledit satellite défilant et au moins un terminal de communication ;
   - ressources spatiales associées aux liaisons de communication entre ledit satellite défilant et au moins une station d'ancrage au sol ;
   - ressources spatiales associées aux liaisons de communication inter-satellitaires entre ledit satellite défilant et au moins un autre satellite de ladite constellation ;
      ledit partage géographique consistant à répartir, au préalable, chacun des trois types de ressources spatiales en fonction de la couverture géographique dudit satellite défilant, à chaque instant prédéterminé de ladite pluralité d'instants prédéterminés de ladite mission ;
- ledit partage géographique est en outre associé, pour chaque type de ressources spatiales, à la réservation d'une capacité tampon dédiée à la gestion inter-satellitaire du glissement de la zone de couverture, fournie par le satellite défilant, entre un instant prédéterminé courant de ladite mission et un instant prédéterminé suivant de ladite pluralité d'instants prédéterminés de ladite mission ;
- le procédé comprend en outre la prédiction du vecteur mobilité dudit terminal et sa prise en compte lors dudit routage ;
- le procédé comprend en outre la détermination de la densité et/ou du trafic des terminaux de communication requérant un accès, et la prise en compte de cette densité et/ou de ce trafic dans l'étape de planification et/ou de contrôle d'accès dynamique ;
- ladite détermination utilise un modèle ARIMA prédéterminé ;
- ledit routage est un routage selon l'un des trois types suivants :
   - routage dudit au moins un terminal vers une station d'ancrage au sol dont la localisation est imposée par ladite nature de service ;
   - routage dudit au moins un terminal vers la station d'ancrage au sol la plus proche ;
   - routage vers au moins une ressource spatiale, associée aux liaisons de communication inter-satellitaires entre ledit satellite défilant et au moins un autre satellite de ladite constellation, et imposée par ladite nature de service.

L'invention concerne également un programme d'ordinateur comportant des instructions logicielles qui, lorsqu'elles sont exécutées par un ordinateur, mettent en oeuvre un procédé de contrôle d'accès dynamique d'au moins un terminal de communication aux ressources de communication satellite d'une constellation de satellites défilants tel que défini ci-dessus.

L'invention concerne également un gestionnaire, également appelé orchestrateur par la suite, configuré pour mettre en oeuvre le procédé précité.

L'invention concerne également un système de communication comprenant un tel gestionnaire, une constellation de satellites défilants, au moins un terminal de communication, au moins une station d'ancrage au sol.

L'invention apparaîtra plus clairement à la lecture de la description qui va suivre, donnée uniquement à titre d'exemple non limitatif, et faite en référence aux dessins dans lesquels :
- [Fig. 1] la figure 1 est une vue schématique d'un gestionnaire selon l'invention ;
- [Fig 2] la figure 2 est un organigramme d'un procédé de contrôle d'accès dynamique d'au moins un terminal de communication aux ressources de communication satellite d'une constellation de satellites défilants, selon l'invention. Le procédé de configuration est mis en oeuvre par le gestionnaire de la figure 1;
- [Fig 3] la figure 3 illustre un exemple de contrôle d'accès géolocalisé mis en oeuvre selon la présente invention ;
- [Fig. 4] la figure 4 illustre comment la constellation de satellites défilants anticipe la partition géolocalisée utilisée selon la présente invention pour fournir un contrôle d'accès dynamique à au moins un terminal de communication.

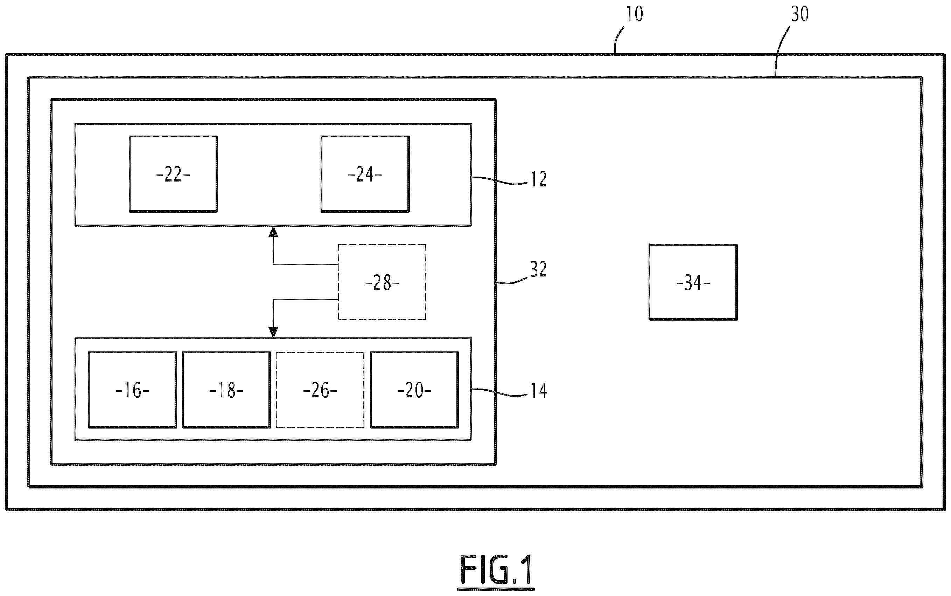

Le gestionnaire 10, également appelé orchestrateur, selon l'invention est illustré sur la figure 1. Comme cela est visible sur cette figure, le gestionnaire 10 comprend tout d'abord un module 12 de planification configuré pour mettre en oeuvre une planification géolocalisée, préalable à ladite mission, de la partition de l'allocation de l'ensemble des ressources de communication satellite de ladite constellation de satellites défilants en fonction d'un besoin géolocalisé, associé à ladite mission, et du défilement prédéterminé de chaque satellite défilant de ladite constellation.

De plus, l'orchestrateur 10 selon la présente invention comprend également un module 14 de contrôle d'accès dynamique configuré pour fournir un contrôle d'accès dynamique dudit au moins un terminal de communication auxdites ressources de communication satellite de ladite constellation de satellites défilants.

Pour ce faire, le module 14 de contrôle d'accès dynamique comprend au moins les différents outils 16, 18 et 20.

L'outil 16 (ou sous-module 16) est un outil d'identification et de localisation configuré pour identifier et localiser géographiquement ledit au moins un terminal requérant un accès auxdites ressources de communication satellite de ladite constellation de satellites défilants.

L'outil 18 (ou sous-module 18) est un outil de détermination configuré pour déterminer la nature du service de communication requis par ledit au moins un terminal requérant un accès auxdites ressources de communication satellite.

L'outil 20 (ou sous-module 20) est un outil de routage configuré pour router ledit au moins un terminal vers un morceau de ladite partition répondant au besoin de communication dudit au moins un terminal, ledit besoin étant au moins défini en fonction de ladite identification, de ladite localisation géographique et de ladite nature de service.

On détaille ci-après plus précisément chacun de ces modules/outils et le cas échéant leurs options de mise en oeuvre.

En complément facultatif, le module 12 de planification géolocalisée de la partition de l'allocation de l'ensemble des ressources de communication satellite de ladite constellation de satellites défilants comprend un outil 22 de partage configuré pour partager géographiquement les trois types distincts de ressources spatiales par satellite défilant, lesdits trois types correspondant aux :
- ressources spatiales associées aux liaisons de communication entre ledit satellite défilant et au moins un terminal de communication (en anglais ces ressources sont connues sous le terme *User Link* car associées à la localisation de l'usager) ;
- ressources spatiales associées aux liaisons de communication entre ledit satellite défilant et au moins une station d'ancrage au sol (en anglais ces ressources sont connues sous le terme *Feeder Link* car associées à la localisation de la station d'ancrage) ;
- ressources spatiales associées aux liaisons de communication inter-satellitaires entre ledit satellite défilant et au moins un autre satellite de ladite constellation, autrement dit, associé à la position des satellites (en anglais ces ressources sont connues via l'acronyme ISL pour *Inter-satellite Links* et associées à la position des satellites).

Ledit partage géographique mis en oeuvre par ledit outil 22 de partage consistant à répartir, au préalable, chacun des trois types de ressources spatiales en fonction de la couverture géographique dudit satellite défilant, à chaque instant prédéterminé de ladite pluralité d'instants prédéterminés de ladite mission.

En complément facultatif, le module 12 de planification géolocalisée de la partition de l'allocation de l'ensemble des ressources de communication satellite de ladite constellation de satellites défilants comprend un outil 24 de réservation, associé audit outil 22 de partage, configuré, pour chaque type de ressources spatiales précité, pour réserver une capacité tampon dédiée à la gestion inter-satellitaire du glissement de la zone de couverture, fournie par le satellite défilant, entre un instant prédéterminé courant de ladite mission et un instant prédéterminé suivant de ladite pluralité d'instants prédéterminés de ladite mission.

En complément facultatif, le module 14 de contrôle d'accès dynamique comprend en outre un outil 26 de prédiction configuré pour prédire un vecteur mobilité dudit terminal propre à être pris en compte par l'outil de routage 20.

En complément facultatif, l'orchestrateur 10 selon la présente invention comprend également un outil 28 de détermination configuré pour déterminer la densité et/ou du trafic des terminaux de communication requérant un accès, cette densité et/ou ce trafic étant propres(s) à être pris en compte par le module 12 de planification et/ou par le module 14 de contrôle d'accès dynamique.

Sur l'exemple de la figure 1, l'orchestrateur 10 comprend une unité de traitement 30 formée par exemple d'une mémoire 32 et d'un processeur 34 associé à la mémoire, et l'orchestrateur 10 est au moins en partie réalisé sous forme d'un logiciel, ou d'une brique logicielle, exécutable par le processeur, notamment le module 12 de planification et ses outils optionnels 22 et 24 de partage et de réservation respectivement, et/ou le module 14 de contrôle d'accès dynamique avec ses outils 16 d'identification, 18 de détermination, 20 de routage et optionnellement 26 de prédiction. La mémoire 32 de l'orchestrateur 10 est alors apte à stocker de tels logiciels ou briques logicielles, et le processeur 34 est alors apte à les exécuter.

En variante non représentée, le module 12 de planification et ses outils optionnels 22 et 24 de partage et de réservation respectivement, et/ou le module 14 de contrôle d'accès dynamique avec ses outils 16 d'identification, 18 de détermination, 20 de routage et optionnellement 26 de prédiction sont réalisés chacun sous forme d'un composant logique programmable, tel qu'un FPGA (de l'anglais Field Programmable Gate Array), ou encore sous forme d'un circuit intégré dédié, tel qu'un ASIC (de l'anglais Application Spécifie integrated Circuit).

Lorsqu'une partie de l'orchestrateur 10 selon la présente invention est réalisée sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

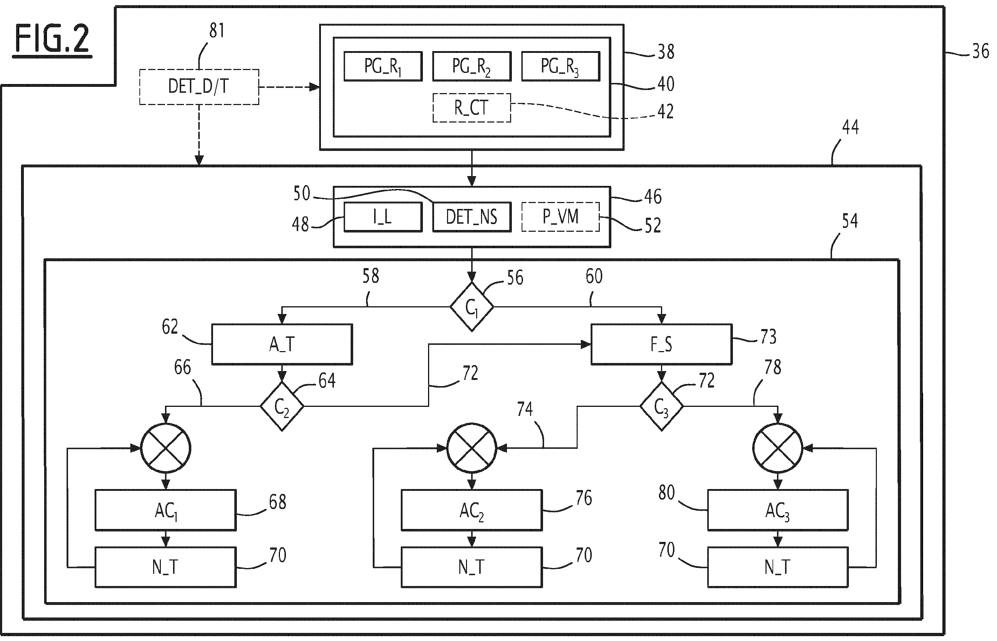

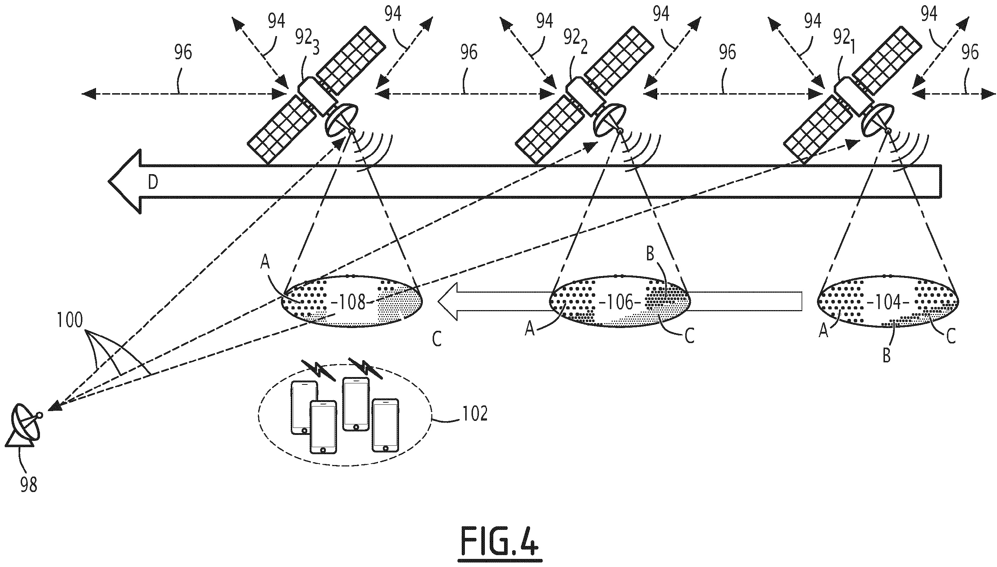

Un procédé 36 de contrôle d'accès dynamique d'au moins un terminal de communication aux ressources de communication satellite d'une constellation de satellites défilants, mis en oeuvre par le gestionnaire 10, sera désormais expliqué en référence à la figure 2 présentant un organigramme des étapes de ce procédé et aux figures 4 et 5 illustrant une mise en oeuvre de celui-ci.

Le procédé 36 de contrôle d'accès dynamique d'au moins un terminal de communication aux ressources de communication satellite d'une constellation de satellites défilants comprend tout d'abord une première étape 38 de planification géolocalisée, préalable à ladite mission, de la partition de l'allocation de l'ensemble des ressources de communication satellite de ladite constellation de satellites défilants en fonction d'un besoin géolocalisé, associé à ladite mission, et du défilement prédéterminé de chaque satellite défilant de ladite constellation.

En complément facultatif, tel qu'illustré par la figure 2, une telle étape de planification 38 comprend une sous-étape 40 de partage géographique PG_R₁, PG_R₂, PG_R₃ de trois types distincts R₁, R₂, R₃, de ressources spatiales par satellite défilant.

Le premier type R₁ correspond aux ressources spatiales associées aux liaisons de communication entre ledit satellite défilant et au moins un terminal de communication (en anglais ces ressources sont connues sous le terme *User Link* car associées à la localisation de l'usager). Par exemple, pour une mission donnée, 80% de la capacité *User Link* est réservée au territoire français lorsque le satellite considéré est au-dessus de la France, et de la capacité *User Link* est réservée au territoire non français pour des flux de communications dont le débit est propre à être par exemple de l'ordre 100 Mb/s.

Le deuxième type R₂ correspond aux ressources spatiales associées aux liaisons de communication entre ledit satellite défilant et au moins une station d'ancrage au sol (en anglais ces ressources sont connues sous le terme *Feeder Link* car associées à la localisation de la station d'ancrage). Par exemple, pour la même mission précitée, 50% de la capacité *Feeder Link* est réservée au territoire français pour les stations d'ancrage localisées en France.

Le troisième type R₃ correspond aux ressources spatiales associées aux liaisons de communication inter-satellitaires entre ledit satellite défilant et au moins un autre satellite de ladite constellation (en anglais ces ressources sont connues via l'acronyme ISL pour *Inter-satellite Links* et associées à la position des satellites). Par exemple, pour la même mission précitée, 20% de la capacité ISL est réservée aux communications entre station d'ancrage et théâtre d'opération pour une opération européenne.

Plus précisément, ledit partage géographique 40 consiste à répartir, au préalable, chacun des trois types R₁, R₂, R₃ de ressources spatiales en fonction de la couverture géographique dudit satellite défilant, à chaque instant prédéterminé de ladite pluralité d'instants prédéterminés de ladite mission.

Par rapport à la répartition globale de l'état de la technique, une telle planification géolocalisée fournit une partition beaucoup plus fine car non seulement géolocalisée en fonction d'un besoin géolocalisé, associé à ladite mission, et du défilement prédéterminé de chaque satellite défilant de ladite constellation, et par ailleurs adaptée à chaque type de ressources spatiale précitées.

En complément optionnel, tel qu'illustré par la figure 2, une telle étape de planification 38 comprend, associée à ladite sous-étape de partage 40, une sous-étape 42 de réservation d'une capacité tampon R_CT dédiée à la gestion inter-satellitaire du glissement de la zone de couverture, fournie par le satellite défilant, entre un instant prédéterminé courant de ladite mission et un instant prédéterminé suivant de ladite pluralité d'instants prédéterminés de ladite mission.

Après ladite planification 38 préalable, le procédé 36 de contrôle d'accès dynamique d'au moins un terminal de communication aux ressources de communication satellite d'une constellation de satellites défilants comprend une étape 44 de contrôle d'accès dynamique dudit au moins un terminal de communication auxdites ressources de communication satellite de ladite constellation de satellites défilants.

Plus précisément, selon cette étape 44, un tel contrôle est mis en oeuvre en appliquant un premier ensemble 46 de sous-étapes comprenant tout d'abord une sous-étape 48 d'identification et de localisation géographique I_L dudit au moins un terminal requérant un accès audites ressources de communication satellite de ladite constellation de satellites défilants.

Pour ce faire, un ensemble de mécanismes est mis en oeuvre afin de permettre d'identifier le terminal requérant un accès. De tels mécanismes correspondent notamment à l'utilisation de sa signature par rapport à ses caractéristiques : son identité internationale d'équipement mobile IMEI (de l'anglais *International Mobile Equipement Identity*), son adresse IP (de l'anglais *Internet Protocol*) allouée, ..., et celles de l'utilisateur avec par exemple un mécanisme d'intelligence artificielle permettant une reconnaissance biométrique, etc..

L'identification permet de sélectionner la partition adaptée, et la localisation permet de déterminer le seuil de capacité à appliquer en accès, de prioriser ou le cas échéant de préempter.

Ce premier ensemble 46 de sous-étapes comprend également une sous-étape 50 de détermination DET_NS de la nature du service de communication requis par ledit au moins un terminal requérant un accès auxdites ressources de communication satellite.

En complément facultatif, ce premier ensemble 46 comprend également une sous-étape 52 de prédiction P_VM du vecteur mobilité dudit terminal et sa prise en compte optionnelle lors d'une sous-étape subséquente 54 détaillée ci-après, ladite sous-étape 54 correspondant au routage dudit au moins un terminal vers un morceau de ladite partition répondant au besoin de communication dudit au moins un terminal, ledit besoin étant au moins défini en fonction de ladite identification et de ladite localisation géographique, obtenues lors de ladite sous-étape 48 d'identification et de localisation géographique I_L, et de ladite nature de service obtenue lors de ladite sous-étape 50 de détermination DET_NS de la nature du service.

Comme indiqué ci-dessus, l'étape 44 de contrôle d'accès dynamique comprend après, mis en oeuvre des sous-étapes précitées 48, 50 et optionnellement 52, la sous-étape 54 de routage dudit au moins un terminal vers un morceau de ladite partition répondant au besoin de communication dudit au moins un terminal, ledit besoin étant au moins défini en fonction de ladite identification, de ladite localisation géographique et de ladite nature de service.

Autrement dit, à partir des critères et caractéristiques de la mission supportée, du domaine de sécurité demandé et de la zone géographique, le ou les terminaux seront intégrés, comme décrit à titre d'exemple par la suite, à une partition (de l'anglais *slice*) spécifique pouvant, préempter ou pas l'accès aux ressources radios demandées en relation à ladite partition, prioriser ou pas l'accès aux ressources radios demandées en relation à ladite partition, ou encore offrir des ressources disponibles pouvant répondre au besoin dit BE (de l'anglais *best effort*).

Sur le mode de réalisation illustré par la figure 1, le routage mis en oeuvre est optionnellement, tel que décrit plus en détail, selon l'un des trois types suivants :
- routage dudit au moins un terminal vers la station d'ancrage au sol la plus proche ;
- routage vers au moins une ressource spatiale, associée aux liaisons de communication inter-satellitaires entre ledit satellite défilant et au moins un autre satellite de ladite constellation, et imposée par ladite nature de service ;
- routage dudit au moins un terminal vers une station d'ancrage au sol dont la localisation est imposée par ladite nature de service.

Pour ce faire, tel qu'illustré par la figure 2, la sous-étape 54 comprend tout d'abord un premier tri 56 en fonction d'une première condition C₁ correspondant à la nature de la localisation géographique fournie par la sous-étape précitée de d'identification et de localisation géographique I_L dudit au moins un terminal.

Selon un premier cas, représenté par la flèche 58, la localisation dudit au moins un terminal est au sein du territoire métropolitain auquel ledit gestionnaire 10 est associé, et selon un deuxième cas, représenté par la flèche 60, la localisation dudit au moins un terminal est en dehors du territoire métropolitain auquel ledit gestionnaire 10 est associé.

Lorsque, selon le premier cas 58, la localisation dudit au moins un terminal est au sein du territoire métropolitain auquel ledit gestionnaire 10 est associé, une sous-étape 62 consiste alors à déterminer A_T les station(s) d'ancrage associée(s) audit territoire métropolitain auquel ledit gestionnaire 10 est associé et au voisinage de ladite localisation.

Selon une sous-étape 64, un deuxième tri est alors effectué en fonction d'une deuxième condition C₂ correspondant cette fois à la nature du service de communication requis par ledit au moins un terminal.

Lorsque la nature du service correspond à un flux souverain, selon la flèche 66, une sous-étape 68 de demande accès dudit au moins un terminal à un ancrage AC₁ sur ledit territoire métropolitain auquel ledit gestionnaire 10 est associé est mise en oeuvre pour respecter ladite nature souveraine de service requise. Cette sous-étape 68 d'accès est ensuite suivie d'une sous-étape 70 de détermination du nombre et du type trafic(s) à supporter associé à cet accès dont le résultat est pris en compte en continu pour poursuivre la demande d'accès selon la sous-étape 68 ou pour la faire évoluer le cas échéant, notamment en fonction du déplacement dudit terminal.

Dans la négative, c'est-à-dire si la nature du service requis par ledit au moins un terminal localisé sur le territoire métropolitain n'est pas souveraine, selon la flèche 72, la requête d'accès dudit terminal est redirigée, de la même façon que les requêtes d'accès de terminaux dont la localisation est en dehors du territoire métropolitain selon la cas 60 précité, vers la sous-étape 73.

La sous-étape 73 est une sous-étape de tri F_S également en fonction de la condition C₃ correspondant à la nature de service, cette sous-étape 73 étant associée au cas 60 où la localisation dudit au moins un terminal est en dehors du territoire métropolitain auquel ledit gestionnaire 10 est associé.

Si, selon la flèche 74, ladite nature de service correspond à un flux souverain à longue élongation, c'est à-dire que dans le cas de la flèche 74, la localisation est hors territoire métropolitain auquel ledit gestionnaire 10 est associé, et que le flux est souverain relativement à ce territoire métropolitain, alors une sous-étape 76 de demande accès dudit au moins un terminal à un ancrage AC₂ en dehors du territoire métropolitain est effectuée avec réservation de ressource sur un lien inter-satellite ISL (de l'anglais *Inter-satellite Links).*

Cette sous-étape 76 d'accès est ensuite suivie d'une sous-étape 70 de détermination du nombre et du type trafic(s) à supporter associé à cet accès dont le résultat est pris en compte en continu pour poursuivre la demande d'accès selon la sous-étape 76 ou pour la faire évoluer le cas échéant, notamment en fonction du déplacement dudit terminal.

Si, selon la flèche 78, ladite nature de service correspond à un flux non souverain, c'est à-dire que dans le cas de la flèche 78, la localisation est dans ou hors territoire métropolitain auquel ledit gestionnaire 10 est associé, et que le flux est non souverain relativement à ce territoire métropolitain, alors une sous-étape 80 de demande accès dudit au moins un terminal à un ancrage AC₃ le plus proche et le moins chargé (accès *local break out* en anglais) est alors mise en oeuvre.

Cette sous-étape 80 d'accès est ensuite suivie d'une sous-étape 70 de détermination du nombre et du type trafic(s) à supporter associé à cet accès dont le résultat est pris en compte en continu pour poursuivre la demande d'accès selon la sous-étape 76 ou pour la faire évoluer le cas échéant, notamment en fonction du déplacement dudit terminal.

Selon une étape 81 optionnelle DET_D/T illustrée en pointillés, le procédé 36 selon la présente invention comprend en outre une étape de détermination de la densité et/ou du trafic des terminaux de communication requérant un accès, et la prise en compte de cette densité et/ou de ce trafic dans l'étape de planification et/ou de contrôle d'accès dynamique. En effet, par exemple selon les zones territoriales, la densité de terminaux nécessite 80% de la partition, ou pour une densité moindre 50% de la partition, et pour une densité encore moindre 20% de la partition.

Selon une variante optionnelle, ladite détermination utilise un modèle ARIMA prédéterminé tel que décrit plus en détail par la suite en relation avec la figure 4.

Ainsi, selon la figure 2, on comprend que le « Géo-slicing » mis en oeuvre selon la présente invention est avantageux car c'est un partitionnement géographique des réseaux virtualisés qui, spécifiquement selon la présente invention, prend en compte la localisation des ancrages et des usagers. Il y a donc prise en compte de la ressource d'accès, de la ressource ISL et de la ressource d'ancrage.

On obtient ainsi une capacité associée au besoin géographique localisé à une couverture des terminaux, et le cas échéant, une partition (i.e. slice) adaptative par rapport à une capacité associée à un trafic/nombre de terminaux à couvrir.

Il est donc possible, selon la présente invention, de déterminer, par exemple, qu'une couverture d'une zone de mille terminaux avec un trafic d'un nombre X prédéterminé de Mbps nécessite 30% de la capacité de la partition des capacités globales, et que cinquante kilomètres plus loin le besoin de couverture peut se réduire du fait qu'il n'y a plus besoin de couvrir sur cette zone mille terminaux mais cinquante terminaux, ce qui revient à ne nécessiter plus que 5% des ressources par exemple.

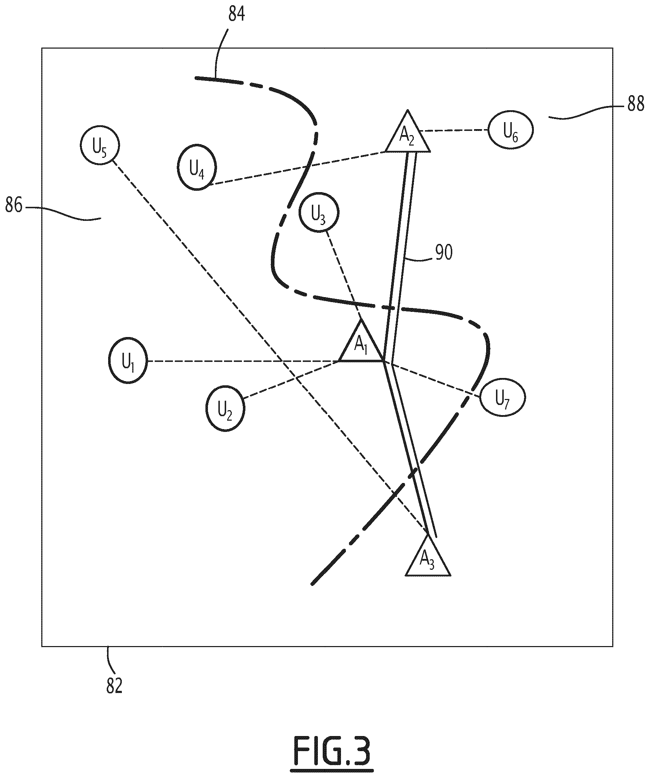

La figure 3 illustre schématiquement les trois types de routage, notamment selon les sous-étapes 68, 76 et 80 précitées.

Plus précisément, la figure 3 représente schématiquement une zone géographique 82 parcourue par une frontière 84 entre deux territoires distincts 86 et 88, par exemple la France 86 et un autre pays 88 frontalier de la France 86.

Une pluralité de terminaux utilisateurs U₁, U₂, U₃, U₄, U₅, U₆ et U₇ sont représentés au sein de ladite zone 82 de même que trois stations d'ancrage : A₁ sur le territoire 86, A₂ et A₃ sur le territoire 88 (i.e. hors territoire 86) reliées par un réseau au sol 90.

L'identification a permis d'établir que les terminaux utilisateurs U₁, U₂, U₃, U₄ sont de la nationalité associée au territoire 86 tandis que les terminaux utilisateurs U₅, U₆ et U₇ sont de la nationalité associée au territoire 88.

Ainsi, selon cet exemple, si l'on applique le procédé précédemment décrit en relation avec la figure 2, les terminaux utilisateurs U₁, U₂, U₄, U₆ et U₇ sont localisés au sein de leurs territoires respectifs (i.e. conformes au cas 58 de la figure 2) tandis que les terminaux utilisateurs U₃ et U₅ sont localisés en dehors de leurs territoires respectifs (i.e. conformes au cas 60 de la figure 2).

La nature du service requis par le terminal U₁ est, par exemple, un service souverain (i.e. conforme au cas 66 de la figure 2) si bien que le routage vers l'ancrage A₁ du territoire 86 de U₁ sur lequel il est lui-même présent est mis en oeuvre (cas 68 de la figure 2).

En revanche, selon un autre exemple, la nature du service requis par le terminal utilisateur U₂ n'est pas un service souverain (i.e. conforme au cas 72 puis 78 de la figure 2) si bien que le routage vers l'ancrage le plus proche de U₂, à savoir l'ancrage A₁, est mis en oeuvre (cas 80 de la figure 2).

Autrement dit, selon cet les terminaux utilisateurs U₁ et U₂ sont tous deux mis en oeuvre vers le même ancrage A₁ mais pas pour les mêmes raisons/besoins.

Comme indiqué précédemment, le terminal utilisateur U₃ est quant à lui localisé en dehors de son territoire (i.e. celui dont il a la nationalité à savoir le territoire 86), ce qui correspond au cas 60 de la figure 2, et la nature du service qu'il requiert n'est pas un service souverain (cas 78 de la figure 2), si bien qu'il est routé vers l'ancrage A₁ le plus proche et le moins chargé (en anglais *Local Break out*)*.*

De même, la nature du service requis par le terminal utilisateur U₄ n'est pas un service souverain (i.e. conforme au cas 72 puis 78 de la figure 2) si bien que le routage vers l'ancrage le plus proche de U₄, à savoir l'ancrage A₂, est mis en oeuvre (cas 80 de la figure 2) indépendamment du fait que l'ancrage A₂ n'est pas sur le même territoire que le terminal utilisateur U₄.

La nature du service requis par le terminal utilisateur U₅ est un service souverain à longue élongation et la nationalité du terminal utilisateur U₅ est celle du territoire 88 alors que le terminal utilisateur U₅ est localisé en dehors (i.e. conforme au cas 74 de la figure 2), si bien qu'un routage vers l'ancrage A₃ du territoire 88, en dehors du territoire 86 sur lequel est localisé le terminal utilisateur U₅, est effectué avec réservation de ressource sur un lien inter-satellite ISL (de l'anglais *Inter-satellite Links).*

La nature du service requis par le terminal U₆ est, par exemple, un service souverain (i.e. conforme au cas 66 de la figure 2) si bien que le routage vers l'ancrage A₂ du territoire 88 de U₆ sur lequel il est lui-même présent est mis en oeuvre (cas 68 de la figure 2).

La nature du service requis par le terminal utilisateur U₇ n'est pas un service souverain (i.e. conforme au cas 72 puis 78 de la figure 2) si bien que le routage vers l'ancrage le plus proche de U₇, à savoir l'ancrage A₁, est mis en oeuvre (cas 80 de la figure 2) indépendamment du fait que l'ancrage A₁ n'est pas sur le même territoire que le terminal utilisateur U₇.

Ainsi, la figure 3 illustre que si le service requis est souverain, un routage vers un ancrage sur le territoire dont le terminal à la nationalité est mis en oeuvre.

La figure 4 illustre comment la constellation de satellites défilants anticipe la partition géolocalisée utilisée selon la présente invention pour fournir un contrôle d'accès dynamique à au moins un terminal de communication.

Selon l'exemple de la figure 4, plusieurs satellites 92₁, 92₂, 92₃ d'une constellation de satellites défilants sont représentés.

A noter que par souci de simplicité sur la figure 4 les satellites 92₁, 92₂, 92₃ sont représentés « comme » seulement alignés selon une même orbite alors qu'en réalité chacun des satellites de ladite constellation suit, une orbite ou loxodromie prédéterminée qui lui est propre, telle qu'une orbite terrestre basse (LEO de l'anglais *low earth orbit*) ou une orbite terrestre moyenne (MEO de l'anglais *medium earth orbit*) selon la constellation considérée, et ce selon un sens de déplacement D, avec des liaisons inter-satellitaires 94 (ici illustré en diagonale) et 96 (ici illustré en latéral) vers les satellites défilants voisins de ladite constellation.

Au sol une station d'ancrage 98 est représentée sur la figure 4, ladite station d'ancrage 98 étant propre à communiquer selon les liaisons de communication 100 respectivement avec chaque satellite défilant 92 représenté.

Comme illustré sur la figure 4, l'ensemble d'éléments satellitaire 92₁, 92₂, 92₃ portant chacun une unité de communication déportée DU (de l'anglais *Deported Unit*) est propre, selon la présente invention à préparer, supporter ou libérer des partitions (de l'anglais slices) en fonction des terminaux 102 et services à porter, et ce tout en étant attaché à un élément centralisé CU (de l'anglais *Central Unit*) de la station d'ancrage 98 positionnée au sol et associée à une zone (i.e. un territoire) prédéterminée (de l'anglais *tracking area*)*.*

Tel qu'indiqué à titre optionnel, selon l'étape 81, le procédé selon la présente invention est en outre propre à prendre en compte la densification des terminaux et du trafic.

Pour ce faire, en relation avec l'élément du gestionnaire 10 (i.e. orchestrateur) dédié au service d'orchestration s'interfaçant à un outil de réservation de ressource en fonction : du service demandé, du niveau de sécurité et droits, etc. (également appelé en anglais *service management control element*)*,* un calcul de planification de premier niveau (i.e. une planification initiale) est mis en oeuvre pour gérer la première allocation de ressources (calcul localisé au sein de centralisé CU (de l'anglais *Central Unit*) précité).

Dans un second temps, un calcul associé à une intelligence artificielle IA embarquée dans chaque unité de communication distribuée DU en charge d'estimer les variations ou les évolutions de trafic, dit prédictif (de l'anglais *forecast*) basé sur un modèle de type ARIMA (de l'anglais AutoRegressive Integrated Moving Average) simplifié car embarqué.

Ce mécanisme permet d'utiliser des informations de la boucle lente sur les événements planifiés ou prévus dans le réseau pour estimer la variation de flux associée. Par exemple, s'il est connu à l'avance qu'un événement important va se produire, comme un pic de trafic pendant une période de pointe, il est alors possible d'ajuster les prévisions en conséquence et donc l'allocation de ressources sur la géo-partition (géo-slice).

Cette préparation de la planification est associée aux missions, cela permet une fourniture (de l'anglais *provisioning*) d'une boucle lente des géo-partitions (Géo-slices) qui s'adapte au contexte opérationnel : augmentation du besoin trafic ou nombre de terminaux, selon une boucle dite rapide.

Coté unité de communication déportée DU, le modèle ARIMA dit « léger » (de l'anglais *light*) permet de mettre en place, par rapport à une série temporelle, un modèle statique alimenté par les besoins d'accès associés aux terminaux, ce modèle statistique étant pris en compte tel que représenté par l'étape 81 de la figure 2 à la fois dans l'étape de planification et/ou dans l'étape de contrôle d'accès dynamique.

Plus précisément, trois composantes sont associées au modèle ARIMA, à savoir les mécanismes dits d'auto régression (AR), d'intégration (I) et de détermination de la moyenne mobile glissante (MA). Chacune de ces composantes capture différentes caractéristiques des séries temporelles.

La composante AR d'auto régression modélise la dépendance linéaire associée au nombre de terminaux accédant à la ressource et le trafic minimal requis afin de valider les observations passées et les observations actuelles sur la relation trafic et terminaux (ce modèle peut être enrichi en utilisant le type de terminaux versus le type de services).

Un tel modèle permet d'intégrer les valeurs « trafics » passées de la série temporelle, qui ont un impact sur le trafic futur. L'ordre p de l'auto régression indique le nombre de valeurs passées prises en compte. Par exemple, pour l'application de la présente invention, la valeur de p est limitée de sorte à prendre en compte environ sept minutes de valeurs passées, cette valeur de p étant établie en relation avec la cadence des satellites. Ces calculs sont partagés avec le satellite de voisinage ayant en charge de reprendre à son compte l'allocation de ressources, par exemple tel qu'illustré sur la figure 4 le satellite 92₂ qui va succéder selon le sens de déplacement D au satellites 92₃.

La composante I d'intégration est utilisée pour traiter les tendances non stationnaires dans les séries temporelles. L'intégration consiste à différencier la série temporelle pour la rendre stationnaire. L'ordre d'intégration d indique le nombre de différenciations nécessaires pour rendre la série temporelle stationnaire. Cette composante d'intégration est limitée afin de permettre une estimation courte de la prévision (de l'anglais *forecast*) à venir. Il n'est pas nécessaire de tendre le modèle prédictif à une valeur haute de confiance (95% pour des modèles dits élevés) mais vers un modèle dit acceptable permettant d'évaluer une tendance.

La composante MA moyenne mobile (i.e. glissante) modélise l'effet des erreurs de prédiction précédentes sur les observations actuelles. Elle considère que les erreurs de prédiction passées ont un impact sur les valeurs futures. L'ordre q de la moyenne mobile indique le nombre d'erreurs de prédiction précédentes prises en compte.

Afin d'optimiser le mécanisme permettant une gestion courte du modèle ARIMA, un ensemble de simulations et retours d'expérience permet d'évaluer les différents paramètres dit d'ordre (AR/I/MA) à partir d'analyse des autocorrélations (ACF). Ces estimations peuvent s'appuyer sur des modèles « Akaike (AIC) » ou « Bayesien (BIC) ».

En outre, la figure 4 illustre notamment que les accès aux ressources DU défilantes (de l'anglais *Distributed Unit*) sont finis et ne peuvent répondre qu'à des contraintes CPU (de l'anglais *central processus unit*) notamment pour les traitements des couches physiques, mémoires, notamment pour la gestion des files d'attentes...) et énergétiques.

Selon la présente invention, un système de communication comprenant le gestionnaire illustré par la figure 1, la constellation de satellites 92 défilants illustrée par cette figure 4, au moins un terminal de communication 102 et au moins une station d'ancrage 98 au sol, est propre à pré-planifier les éléments satellitaires défilants 92₁, 92₂, 92₃ qui seront en charge de prendre en compte le besoin de partition (de l'anglais *slices*) et implicitement la libération des ressources en fonction du défilement des satellites 92₁, 92₂, 92₃ et, optionnellement du vecteur mobilité des terminaux 102 (pouvant être prédictibles ou non).

Plus précisément, la figure 4 illustre le mécanisme de seuil capacitaire utilisé pour gérer la mobilité glissante de partition (slice) par rapport à l'unité de communication déportée DU d'accueil et sa capacité tampon de traitement et d'accueil de nouveaux terminaux dit entrants.

En effet, les zones de couvertures 104, 106 et 108, respectivement associées aux satellites 92₁, 92₂, 92₃ illustrent, qu'au fur et à mesure du défilement selon le sens de déplacement D, la partition de la zone de couverture est glissante. En effet, selon par exemple les constellations de type MEO ou LEO précitées la zone couverte par un satellite défile du fait du défilement du satellite et ne couvre une zone donnée de la planète que pour quelques minutes, si bien que selon la présente invention, au fur et à mesure du défilement, chaque unité de communication distribuée DU est propre à anticiper par prédiction le changement de répartition de sa zone de couverture entre différents opérateurs au sol et met en oeuvre pour ce faire une réservation d'une capacité tampon dédiée à la gestion inter-satellitaire du glissement de la zone de couverture fournie par le satellite défilant considéré au fur et à mesure du défilement entre un instant prédéterminé courant de la mission et un instant prédéterminé suivant de la pluralité d'instants prédéterminés de la mission de communication prédéterminée.

La zone de couverture 104 du satellite 92, est, par exemple, schématiquement partitionnée en trois partitions A, B, C illustrées respectivement par trois textures différentes sur la figure 4. En particulier, la partition A (i.e. dédiée à un opérateur A) est majoritaire. La partition B intermédiaire correspond à la capacité tampon réservée à la préparation du glissement selon le sens de déplacement D, et la partition C (i.e. dédiée à un opérateur C) est minoritaire.

Pour la zone de couverture 106 du satellite 92₂, qui précède le satellite 92₁ selon le sens de déplacement D, la partition A (i.e. dédiée à un opérateur A) reste majoritaire mais a diminué par rapport à celle de la couverture 104 du satellite 92₁, au profit de la partition B dédiée à la capacité tampon, et de la partition C (i.e. dédiée à un opérateur C).

Enfin, la zone de couverture 108 du satellite 92₃, qui précède le satellite 92₂, selon le sens de déplacement D présente sensiblement une équipartition entre la partition A (i.e. dédiée à un opérateur A) et la partition C (i.e. dédiée à un opérateur C). Autrement dit, la figure 4, illustre comment la capacité tampon permet temporairement à un satellite à se préparer à accueillir un changement de partition géolocalisé au fur et à mesure de son défilement.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi de prendre en compte les aspects et besoins spécifiques associés à la mise en place d'une partition géolocalisé (selon la notion anglaise de *geofencing*) permettant d'offrir une partition physique sur une zone ou plusieurs zones définies.

La présente invention permet également de prendre en compte des problématiques tels que la gouvernance des moyens physiques et d'optimisation de l'ingénierie de trafic (de l'anglais *trafic engineering*), en partageant géographiquement les trois types distincts de ressources spatiales par satellite défilant, à savoir les ressources spatiales associées aux liaisons de communication entre ledit satellite défilant et au moins un terminal de communication (en anglais ces ressources sont connues sous le terme *User Link* car associées à la localisation de l'usager) ; les ressources spatiales associées aux liaisons de communication entre ledit satellite défilant et au moins une station d'ancrage au sol (en anglais ces ressources sont connues sous le terme *Feeder Link* car associées à la localisation de la station d'ancrage) ; et les ressources spatiales associées aux liaisons de communication inter-satellitaires entre ledit satellite défilant et au moins un autre satellite de ladite constellation (en anglais ces ressources sont connues via l'acronyme ISL pour *Inter-satellite Links* et associées à la position des satellites).

La présente invention permet également de prendre en compte l'ingénierie de trafic (de l'anglais *trafic engineering*) associée aux liens physiques inter-satellitaires ou entre unité de communication déportée DU et éléments centralisés CUs de station d'ancrage en utilisant notamment des moyens appelés « light speed » tenant compte des demandes des usagers dans la limite des capacités des trois types de ressources précités.

Ainsi, la présente invention permet de garantir une ressource spatiale géolocalisée et le contrôle à l'accès à cette ressource, d'optimiser l'usage de la ressource spatiale, d'orchestrer dynamiquement une planification quasi instantanée dite « Zéro day », d'offrir une capacité de préemption et priorisation sur la partition (slice) géo-localisée, ainsi qu'une capacité de partition dite de suivi d'usager.

## Revendications

1. Procédé (36) de contrôle d'accès dynamique d'au moins un terminal de communication aux ressources de communication satellite d'une constellation de satellites défilants, le procédé comprenant les étapes suivantes, pour au moins une mission de communication prédéterminée :
- planification géolocalisée (38), préalable à ladite mission, de la partition de l'allocation de l'ensemble des ressources de communication satellite de ladite constellation de satellites défilants en fonction d'un besoin géographique localisé de couverture des terminaux usagers, associé à ladite mission, et du défilement prédéterminé de chaque satellite défilant de ladite constellation ;
- contrôle d'accès dynamique (44) dudit au moins un terminal de communication auxdites ressources de communication satellite de ladite constellation de satellites défilants en appliquant, à chaque instant prédéterminé d'une pluralité d'instants prédéterminés de ladite mission, les sous-étapes suivantes :
- identification et localisation (48) géographique dudit au moins un terminal requérant un accès audites ressources de communication satellite de ladite constellation de satellites défilants ;
- détermination (50) de la nature du service de communication requis par ledit au moins un terminal requérant un accès auxdites ressources de communication satellite, la nature de service étant un service souverain ou non ;
- routage dudit au moins un terminal vers un morceau de ladite partition répondant au besoin de communication dudit au moins un terminal, ledit besoin de communication dudit au moins un terminal étant au moins défini en fonction de ladite identification, de ladite localisation géographique et de ladite nature de service ;
ladite planification géolocalisée de la partition de l'allocation de l'ensemble des ressources de communication satellite de ladite constellation de satellites défilants comprend le partage (40) géographique de trois types distincts de ressources spatiales par satellite défilant, lesdits trois types correspondant aux :
- ressources spatiales associées aux liaisons de communication entre ledit satellite défilant et au moins un terminal de communication ;
- ressources spatiales associées aux liaisons de communication entre ledit satellite défilant et au moins une station d'ancrage au sol ;
- ressources spatiales associées aux liaisons de communication inter-satellitaires entre ledit satellite défilant et au moins un autre satellite de ladite constellation ;
ledit partage géographique consistant à répartir, au préalable, chacun des trois types de ressources spatiales en fonction de la couverture géographique dudit satellite défilant, à chaque instant prédéterminé de ladite pluralité d'instants prédéterminés de ladite mission.

2. Procédé selon la revendication 1, dans lequel ledit partage géographique est en outre associé, pour chaque type de ressources spatiales, à la réservation (42) d'une capacité tampon dédiée à la gestion inter-satellitaire du glissement de la zone de couverture, fournie par le satellite défilant, entre un instant prédéterminé courant de ladite mission et un instant prédéterminé suivant de ladite pluralité d'instants prédéterminés de ladite mission.

3. Procédé selon l'une quelconque des revendications précédentes comprenant en outre la prédiction du vecteur mobilité dudit terminal et sa prise en compte lors dudit routage.

4. Procédé selon l'une quelconque des revendications précédentes comprenant en outre la détermination de la densité et/ou du trafic des terminaux de communication requérant un accès, et la prise en compte de cette densité et/ou de ce trafic dans l'étape de planification et/ou de contrôle d'accès dynamique.

5. Procédé selon la revendication 4, dans lequel ladite détermination utilise un modèle ARIMA prédéterminé.

6. Procédé selon l'une quelconque des revendications précédentes dans lequel ledit routage est un routage selon l'un des trois types suivants :
- routage dudit au moins un terminal vers une station d'ancrage au sol dont la localisation est imposée par ladite nature de service ;
- routage dudit au moins un terminal vers la station d'ancrage au sol la plus proche ;
- routage vers au moins une ressource spatiale, associée aux liaisons de communication inter-satellitaires entre ledit satellite défilant et au moins un autre satellite de ladite constellation, et imposée par ladite nature de service.

7. Programme d'ordinateur comportant des instructions logicielles qui, lorsqu'elles sont exécutées par un ordinateur, mettent en oeuvre un procédé de contrôle d'accès dynamique d'au moins un terminal de communication aux ressources de communication satellite d'une constellation de satellites défilants selon l'une quelconque des revendications précédentes.

8. Gestionnaire configuré pour mettre en oeuvre le procédé de contrôle d'accès dynamique d'au moins un terminal de communication aux ressources de communication satellite d'une constellation de satellites défilants selon l'une quelconque des revendications 1 à 6.

9. Système de communication comprenant :
- un gestionnaire selon la revendication 8 ;
- une constellation de satellites défilants ;
- au moins un terminal de communication ;
- au moins une station d'ancrage au sol.
